# EUROPÄISCHE PATENTSCHRIFT

(11) **EP 1 983 450 B1**
(45) Veröffentlichungstag und Bekanntmachung des Hinweises auf die Patenterteilung: **13.06.2018**
(21) Anmeldenummer: 08103317.7
(22) Anmeldetag: 02.04.2008
(51) Int. Cl.: G06F 17/30

(54) **Verfahren und Vorrichtung zur Ermittlung und Bereitstellung von Information zu einem Bild**
Method and device for detecting and providing information about a picture
Procédé et dispositif de détermination et de préparation d'informations sur une image

(30) Priorität: 18.04.2007 DE 102007018562
(43) Veröffentlichungstag der Anmeldung: 22.10.2008
(73) Patentinhaber: SmartMunk GmbH, 52064 Aachen (DE)
(72) Erfinder: Gadeib, Andera, 52064 Aachen (DE)
(74) Vertreter: Lippert Stachow Patentanwälte Rechtsanwälte

(56) Entgegenhaltungen:
- CHRONAKI C E ET AL: "I2Cnet medical image annotation service" MEDICAL INFORMATICS, Bd. 22, Nr. 4, 1997, Seiten 337-347, XP002559588 UK
- Catherine Chronaki ET AL: "A Web-based Environment for Medical Collaboration in a Regional Healthcare Network", , 28 June 1997 (1997-06-28), XP055395231, Retrieved from the Internet: URL:http://users.ics.forth.gr/~katehaki/pu blications/car97.pdf [retrieved on 2017-08-01]

## Beschreibung

Die Erfindung betrifft ein Verfahren und eine Vorrichtung zur Ermittlung und Bereitstellung von Informationen zu einem Bild in einer Befragung, bei welcher das Bild einer Mehrzahl von Befragungspersonen angezeigt wird, Eingaben von Metadaten zu dem Bild, welche durch die Mehrzahl von Befragungspersonen eingegeben werden, erfasst und eine Auswertung der erfassten Metadaten zu dem Bild durchgeführt werden.

Insbesondere über das Medium des Internets sind auf einfache Weise Erhebungen durchführbar, bei welchen kurzfristig eine Vielzahl von Befragungspersonen erreichbar sind, die sich zu beliebigen Themen äußern können. Ein solches herkömmliches Verfahren beschreibt die internationale Offenlegungsschrift WO 2006/116196 A2. Bei dem bekannten Verfahren können Benutzer beliebige Kommentare, Stichworte, Beschreibungen, Einordnungen, Bewertungen oder Zusätze etc., die im Folgenden allgemein als Metadaten bezeichnet werden, zu einem Medienobjekt wie einem Bild abgeben. Eine derartige Erfassung von Metadaten, welche von einer Mehrzahl von Befragungspersonen zu einem Bild abgegeben wurden, ist nach dem herkömmlichen Verfahren in der Regel auf das gesamte Medienobjekt, beispielsweise das Bild beschränkt. In bestimmten Situationen könnte es jedoch wünschenswert sein, detailliertere Metadaten zu dem Bild zu erfassen und zu verarbeiten, was mit dem herkömmlichen Verfahren nicht möglich ist.

Der Artikel "I2Cnet Medical Image Annotation Service", Medical Informatics, Special Issue, Band 22(3), 337 - 347, 1997 beschreibt das auf den Medizinsektor gerichtete "Content-Netzwerk" I²Cnet, das auf die inhaltsbezogene Verwaltung von Bildern gerichtet ist. Dabei können Bildern oder Teilen von Bildern Annotationen zugeordnet werden mittels Zeigern, welche das jeweilige digitale Objekt angeben. Der Artikel "A Web-based Environment for Medical Collaboration in a Regional Healthcare Network", Proceedings of the 11th International Symposium and Exhibition of Computer Assisted Radiology and Surgery (CAR 97), Berlin, Germany, June 25-28, 1997, pp. 656-661, beschreibt ein Verfahren, das erlaubt, Eingaben von verschiedenen Personen zu einem Gesamtbild zu speichern, so dass zu dem Gesamtbild zu einem späteren Zeitpunkt die verschiedenen Eingaben der verschiedenen Personen sämtlich abgerufen werden können. Insofern besteht die Aufgabe der Erfindung darin, ein Verfahren bzw. eine Vorrichtung zu geben, mit welcher eine detailliertere Erhebung über ein Bild ermöglicht wird, wobei die erhobenen Metadaten so datenverarbeitet werden, dass sie einer statistischen Auswertung zugängig werden.

Auf überraschend einfache Weise wird diese Aufgabe erfindungsgemäß schon durch ein Verfahren mit den Merkmalen von Anspruch 1 bzw. einer Vorrichtung mit den Merkmalen von Anspruch 11 gelöst.

Verfahrensseitig zeichnet sich die Erfindung dadurch aus, dass eine computergestützte statistische Auswertung der gespeicherten Metadaten zu dem Bild durchgeführt wird, und dass das Bild in vor- und/oder nachbestimmte Bildabschnitte unterteilt wird, wobei diese Bildabschnitte gespeichert werden, wobei die Eingabe eines jeden Metadatums zu einem, von einer Befragungsperson frei auswählbaren Bereich des Bildes erfasst und gespeichert wird und wobei das Metadatum ein Skalenwert ist, wobei zu einem ausgewählten Bildbereich mehrere Metadaten jeweils in Form eines Skalenwertes eingegeben, erfasst und gespeichert werden, wobei der frei ausgewählte Bildbereich mit den in Bezug auf den Beginn der Befragung vor- oder nachbestimmten, gespeicherten Bildabschnitten verglichen wird und beim Auftreten einer solchen flächenmäßigen Übereinstimmung, dass der frei ausgewählte Bildbereich mindestens 60 % der Fläche eines vor- oder nachbestimmten Bildabschnitts umfasst, dem übereinstimmenden, vor- oder nachbestimmten Bildabschnitt das zu dem frei ausgewählten Bildbereich gespeicherte Metadatum zugeordnet wird, wodurch eine Datenbasis für die statistische Auswertung erzeugt wird, und wobei Daten der statistischen Auswertungen zusammen mit Daten über die vor- und/oder nachbestimmten Bildabschnitte in einer Datenbank gespeichert werden, und wobei die statistische Auswertung der gespeicherten Metadaten zu dem Bild mittels der Datenbasis, bei der die zu dem Bild gespeicherten Metadaten den vor- und/oder nachbestimmten Bildabschnitten zugeordnet sind, durchgeführt wird, wobei aus den Eingaben aller Metadaten zu den jeweiligen Bildabschnitten ein Datensatz berechnet wird, welcher einem jeden Bildabschnitt einen Wert einer statistischen Kenngröße zuordnet.

Durch die beschriebene verfahrensmäßige Maßnahme wird einerseits erreicht, dass die Befragungspersonen nicht nur zum Gesamtbild, sondern auch zu bestimmten Bereichen Metadaten eingeben können. Dabei lässt das erfindungsgemäße Verfahren es zu, dass eine Befragungsperson einen beliebigen Bildbereich auswählt und hierzu ein Metadatum eingibt, sodass die Befragungspersonen in Bezug auf die Auswahl von Bildbereichen vollkommen unabhängig von irgendwelchen Vorgaben auswählen können. Beispielsweise kann das gesamte Bild, ein Teil des Bildes oder im Extremfall das kleinste Bildteil, d.h. ein einzelnes Bildpixel ausgewählt werden. Dabei wird zumindest ein Metadatum eingegeben und vom System erfasst. Die Befragungspersonen werden insofern in Bezug auf das Bild oder Bildteile selbst nicht vorbeeinflusst, sondern können beliebige Bereiche auswählen, zu welchen dann zumindest ein Metadatum eingegeben wird. Das erfindungsgemäße Verfahren eignet sich hervorragend für Erhebungen zu Markt- bzw. Werbezwecken.

Um die in Bezug auf den Bildbereich beliebigen Eingaben statistisch auswerten zu können, ist erfindungsgemäß vorgesehen, den von der jeweiligen Befragungsperson ausgewählten Bildbereich mit vor- oder nachbestimmten Bildabschnitten, welche Teilbereiche des Gesamtbildes oder das gesamte Bild darstellen, zu vergleichen. Diese vor- oder nachbestimmten Bildabschnitte können zusammengesetzt wie einzelne Mosaiksteine das gesamte Bild darstellen, es kann jedoch auch sein, dass die Bildabschnitte zusammengesetzt nur einen Teil des Bildes darstellen. Insofern muss die Aufteilung des Bildes in vor- oder nachbestimmte Bildabschnitte nicht in jedem Fall vollständig sein, d.h. nicht in jedem Fall so, dass alle vor- oder nachbestimmten Bildabschnitte zusammengesetzt das vollständige Bild ergeben.

Darüber kann auch vorgesehen sein, dass sich vor- oder nachbestimmte Bildabschnitte überlappen, d.h. gleiche Bildteile umfassen.

"Vorbestimmt" bedeutet dabei, dass die Bildabschnitte vor der Erhebung festgelegt werden. "Nachbestimmt" bedeutet, dass nach dem Beginn der Befragung, d.h. während und/oder nach Abschluss der Befragung die Bildabschnitte festgelegt werden, mit welchen die jeweils ausgewählten Bildbereiche verglichen werden.

Zum besseren Verständnis werden im Folgenden die von Befragungspersonen ausgewählten Bildteile als Bildbereiche und die vor- bzw. nachbestimmten Bildteile als Bildabschnitte bezeichnet.

Ergibt der Vergleich nach vorgegebenen Kriterien eine Übereinstimmung, wird das zu einem ausgewählten Bildbereich erfasste Metadatum dem übereinstimmenden Bildabschnitt zugeordnet, sodass nachfolgend eine Auswertung der Erhebung in Bezug auf vor- oder nachbestimmte Bildabschnitte erfolgen kann. Hierdurch können die von den Befragungspersonen eingegebenen Informationen auf vorbestimmte Daten abgeglichen werden und beispielsweise Hypothesen und Annahmen zu den jeweiligen Bildern verifiziert werden.

Durch die erfindungsgemäße Abbildung der frei auswählbaren Bildbereiche mit zugeordneten Metadaten auf vor- und/oder nachbestimmten Bildabschnitten, denen dann die jeweiligen Metadaten zugeordnet werden, wird erst eine einfache Analyse der erhobenen Daten ermöglicht.

Für den Vergleich des frei ausgewählten Bildbereichs mit den vor- und/oder nachbestimmten Bildabschnitten in Bezug auf eine flächenmäßige Übereinstimmung kann beispielsweise festgelegt werden, dass eine Übereinstimmung dann vorliegt, wenn der frei ausgewählte Bildbereich mindestens einen vorgegebenen Prozentsatz eines Bildabschnittes umfasst. Dieses Maß kann zweckmäßigerweise zwischen 50% und 90% liegen, besonders zweckmäßig zwischen 60% und 70%.

Vorteilhafte Ausführungsformen sind in den Unteransprüchen angegeben.

Vorzugsweise sind die frei auswählbaren Bildbereiche bzw. die vor- und/oder nachbestimmten Bildabschnitte zusammenhängend, insbesondere rechteckförmig, sodass diese auf einfache Weise mittels einer Computermaus eingebbar sind. Dabei kann es zweckmäßig sein, wenn die Gesamtheit aller Bildabschnitte gerade das Bild ergibt, wobei die Bildabschnitte sich nicht überlappen. In bestimmten Ausführungsformen kann jedoch auch eine solche Überlappung vorgesehen sein.

Es kann zweckmäßig sein, wenn die durch die statistische Auswertung ermittelten Informationen zu dem Bild bzw. zu den Bildabschnitten visuell dargestellt werden.

Erfindungsgemäß ist ein zu einem Bildbereich abgegebenes Metadatum, welches wie beschrieben im Zuge einer nachfolgenden Datenverarbeitung einem vor- bzw. nachbestimmten Bildabschnitt zugeordnet wird, ein Skalenwert, wobei aus den Eingaben aller Metadaten zu den jeweiligen Bildabschnitten ein Datensatz berechnet wird, welcher einem Bildabschnitt einen Wert einer statistischen Kenngröße zuordnet. Dabei kann dieser Skalenwert ein nichtmetrischer, d.h. ein nominaler, ein binärer oder ein ordinaler, jedoch auch ein metrischer Wert wie ein intervallskalierter oder ein verhältnisskalierter Wert sein. Die angegebene statistische Kenngröße ist erfindungsgemäß auch ganz allgemein zu verstehen und kann beispielsweise einen Mittelwert, einen Häufigkeitswert oder auch eine Prozentangabe etc. umfassen. Der angegebene Datensatz umfasst zumindest den jeweiligen Bildabschnitt mit zugeordnetem Wert der jeweiligen statistischen Größe.

Es kann zweckmäßig sein, wenn das vom Benutzer angegebene Metadatum zu dem ausgewählten Bildbereich aus zwei möglichen Skalenwerten ausgewählt wird (beispielsweise angenehm, unangenehm; kalt, warm; positiv, negativ; sympathisch, unsympathisch; etc.) und zu jedem Bildabschnitt für beide mögliche Skalenwerte ein Wert einer jeweiligen Kenngröße unter Berücksichtigung der Eingaben von Befragungspersonen, insbesondere von allen Befragungspersonen berechnet wird. Diese Kenngröße kann beispielsweise eine Größe sein, welche die Häufigkeit eines bestimmten Skalenwertes über die Befragungspersonen oder auch ein gemittelter Skalenwert sein.

Es kann zweckmäßig sein, wenn die Werte der Kenngröße farbcodiert werden und eine Topologie des Bildes berechnet wird, bei welcher die Werte der Kenngröße an jedem Bildabschnitt farbcodiert sind. Durch eine solche Datenverarbeitung wird eine Bilddarstellung ermöglicht, in welcher im Bild selbst die besagte Kenngröße farbcodiert angegeben werden kann, sodass in einer, wenn auch farbverfälschten Darstellung des Bildes, der Wert für die jeweiligen Bildabschnitte ermittelte Kenngröße darstellbar ist.

Nachdem für jeden vor- oder nachbestimmten Bildabschnitt eine Kenngröße für die Eingaben der Befragungspersonen ermittelt wurde, kann es zweckmäßig sein, wenn für jeden Bildabschnitt eine Größenskalierung ermittelt wird, welche von dem jeweiligen Wert der Kenngröße abhängt, beispielsweise von der jeweiligen Auswahlhäufigkeit des Bildabschnittes. Hierdurch kann eine Darstellung des Ergebnisses der Erhebung bereitgestellt werden, bei welcher die Größendarstellung des Bildabschnittes von der zugeordneten Größenskalierung abhängt.

Um das Ergebnis der Erhebung in deren Auswertung einfließen zu lassen, kann erfindungsgemäß auch vorgesehen sein, dass zumindest ein nachbestimmter, zusammenhängender Bildabschnitt festgelegt wird, der mit einer größeren als einer vorgegebenen Wahrscheinlichkeit von ausgewählten Bildbereichen umfasst ist. Diese Maßnahme ermöglicht eine automatische Anpassung der Auswertung an die Eingaben der Befragungspersonen, welche wie beschrieben einen oder mehrere frei auswählbare Bildbereiche im Gesamtbild angeben können. In einer alternativen Ausführungsform kann auch vorgesehen sein, dass der nachbestimmte Bildabschnitt manuell ausgewählt wird. Die Festlegung eines solchen nachbestimmten Bildabschnitts sowie die diesbezügliche Auswertung der eingegebenen Metadaten wird im Folgenden als "Postcode"-Auswertung bezeichnet, während die Auswertung mit vorbestimmten Bildabschnitten als "Precode"-Auswertung bezeichnet wird.

Erfindungsgemäß werden zu einem ausgewählten Bildabschnitt zweckmäßigerweise nicht nur ein einzelnes, sondern auch mehrere Metadaten eingegeben, wobei jedes Metadatum jeweils in Form eines Skalenwertes eingegeben wird. Insofern ermöglicht diese Weiterbildung eine verbesserte Informationsaussage zu einem ausgewählten Bildbereich, beispielsweise könnte zu einem Bildbereich ein erstes Metadatum für eine Skala mit den Skalenwerten negativ, positiv, ein zweites Metadatum für die Skala mit den Skalenwerten sympathisch, unsympathisch eingegeben und dann wie vorstehend beschrieben in Bezug auf die vor- bzw. nachbestimmten Bildabschnitte verarbeitet werden.

Besonders zweckmäßig ist es, wenn die über die Auswertung ermittelte Information zum Bild in Form einer Tabelle dargestellt wird, welche z.B. für vorbestimmte Bildabschnitte zugeordnete Metadaten, deren Absolut-, Relativhäufigkeiten und/oder Verhältnisse angibt.

Es kann zweckmäßig sein, wenn die besagte Tabelle auch für nachbestimmte Bildabschnitte zugeordnete Metadaten, z.B. in Form von Skalenwerten, deren Absolut-, Relativhäufigkeiten und/oder Verhältnisse angibt.

Es kann zweckmäßig sein, wenn für eine Befragungsperson insbesondere für alle Befragungspersonen personenbezogene Parameter gespeichert werden, wobei eine Filterfunktion bereitgestellt wird zum Festlegen vorbestimmter, den jeweiligen Befragungspersonen zugeordnete Parameter. Hierdurch wird ermöglicht, dass für eine vorgegebene Auswertung der erhobenen Metadaten zu dem Bild die Eingaben vorgegebener Befragungspersonen auswählbar sind. Die Eingaben anderer Befragungspersonen werden dann für die jeweilige Auswertung ignoriert.

Vorrichtungsseitig löst die Erfindung die obige Aufgabe mit einer Vorrichtung zur Ermittlung und Bereitstellung von Informationen zu einem Bild in einer Befragung mit einem Mittel zur Erfassung von Metadaten zu dem Bild, welche durch eine Mehrzahl von Befragungspersonen voneinander unabhängig eingegeben werden, und einen Speicher zur Speicherung der eingegebenen Metadaten. Die erfindungsgemäße Vorrichtung zeichnet sich dadurch aus, dass die Vorrichtung eine Datenverarbeitungseinrichtung zur Durchführung einer statistischen Auswertung der gespeicherten Metadaten zu dem Bild umfasst, wobei in dem Speicher Daten zur Festlegung von in Bezug auf den Beginn der Befragung vor- und/oder nachbestimmten Abschnitten des Bildes abgelegt sind, wobei jedes gespeicherte Metadatum in dem Speicher einem, von einer Befragungsperson frei auswählbaren Bereich des Bildes zugeordnet ist, und wobei das Metadatum ein Skalenwert ist wobei zu einem ausgewählten Bildbereich mehrere Metadaten jeweils in Form eines Skalenwertes eingegeben, erfasst und gespeichert werden, und wobei die Datenverarbeitungseinrichtung ausgebildet ist zum Vergleichen des frei ausgewählten Bildbereichs mit den vor- und/oder nachbestimmten Abschnitten des Bildes und zum Auffinden des vor- und/oder nachbestimmten Bildabschnitts, welcher mit dem frei ausgewählten Bereich eine solche flächenmäßige Übereinstimmung besitzt, der der frei ausgewählte Bildbereich mindestens 60 % der Fläche eines vor- oder nachbestimmten Bildabschnitts umfasst, wobei die Datenverarbeitungseinrichtung ausgebildet ist zum Zuordnen des für einen frei ausgewählten Bildbereichs gespeicherten Metadatums zum übereinstimmenden, vor- oder nachbestimmten Bildabschnitts in dem Speicher, wodurch sie eine Datenbasis für die statistische Auswertung erzeugt, und wobei Daten der statistischen Auswertungen (120a) zusammen mit Daten über die vor- und/oder nachbestimmten Bildabschnitte (120b, 120d) in einer Datenbank (120) gespeichert werden, und. Die Datenverarbeitung führt dabei die statistische Auswertung von erfassten Metadaten zu dem Bild mittels der Datenbasis, bei der die zu dem Bild gespeicherten Metadaten den vor- und/oder nachbestimmten Bildabschnitten zugeordnet sind, durch, wobei aus den Eingaben aller Metadaten zu den jeweiligen Bildabschnitten ein Datensatz berechnet wird, welcher einem jeden Bildabschnitt einen Wert einer statistischen Kenngröße zuordnet.

Vorzugsweise werden Auswertedaten in einer Datenbank gespeichert.

Die erfindungsgemäße Vorrichtung kann zweckmäßigerweise mehrere, jeweils einer Befragungsperson zugeordnete Clients über ein Computernetz umfassen, die an einen Server angeschlossen sind, welcher mit einer Datenbank und der Datenverarbeitungseinrichtung verbunden ist. Insbesondere kann der Server die Datenbank und die Datenverarbeitungseinrichtung umfassen. Durch eine derartige Gestaltung der Vorrichtung wird erreicht, dass die Befragungspersonen über ihren jeweiligen Client die Metadaten an den Server übermitteln können, in welchem dann nachfolgend die Auswertung erfolgt.

Dabei kann es auch zweckmäßig sein, wenn zumindest ein weiterer Client über das Computernetz an den Server angeschlossen ist, an dem Auswertedaten der Auswertung über die erfassten Metadaten zu dem Bild übermittelbar sind.

Besonders zweckmäßig ist es, wenn von diesem Client Auswerteparameter wie Filterparameter oder Daten zur Festlegung von vor- und/oder nachbestimmten Bildabschnitten an den Server übermittelbar sind, sodass von diesem Client die Auswertung gesteuert werden kann. Beispielsweise können über die Eingabe der Filterparameter, welche den Befragungspersonen zugeordnet sind, genutzt werden, um bestimmte Befragungspersonen in die Auswertung einzuschließen bzw. auszuschließen.

Die Erfindung wird im Folgenden durch das Beschreiben einer Ausführungsform unter Zugrundelegen der beiliegenden Zeichnungen erläutert, wobei
- Figur 1: eine Client-Server-Umgebung für die Durchführung eines beispielhaften erfindungsgemäßen Verfahrens zur Ermittlung und Bereitstellung von Informationen zu einem Bild mittels einer Befragung, Figur 2 ein Ablaufdiagramm für die Eingabe von Metadaten zu einem Bild,
- Figur 3: eine solche Eingabe in einem Beispiel,
- Figur 4: eine Darstellung der erhobenen und verarbeiteten Informationen zu einem vorbestimmten Bildabschnitt,
- Figur 5: eine Darstellung der erhobenen und verarbeiteten Informationen unter Angabe von vorbestimmten Bildabschnitten, die von den Befragungspersonen negativ gewertet wurden,
- Figur 6: eine Darstellung der erhobenen und verarbeiteten Informationen unter Angabe von vorbestimmten Bildabschnitten, welche von den Befragungspersonen positiv bewertet wurden,
- Figur 7: eine Darstellung des Abrufs der Eingabe von Metadaten durch eine bestimmte Befragungsperson, wobei die Eingabe der in Figur 3 gezeigten entspricht,
- Figur 8: eine Darstellung der erfassten Informationen zu einem Bild, bei welcher die vorbestimmten Bildabschnitte als Kreis dargestellt sind, wobei der jeweilige Kreisdurchmesser proportional zur Nennhäufigkeit dargestellt ist und
- Figur 9: eine Darstellung entsprechend der von Figur 8, wobei die jeweilige Bezeichnung des vorbestimmten Bildabschnittes durch den Bildabschnitt selbst repräsentiert ist.

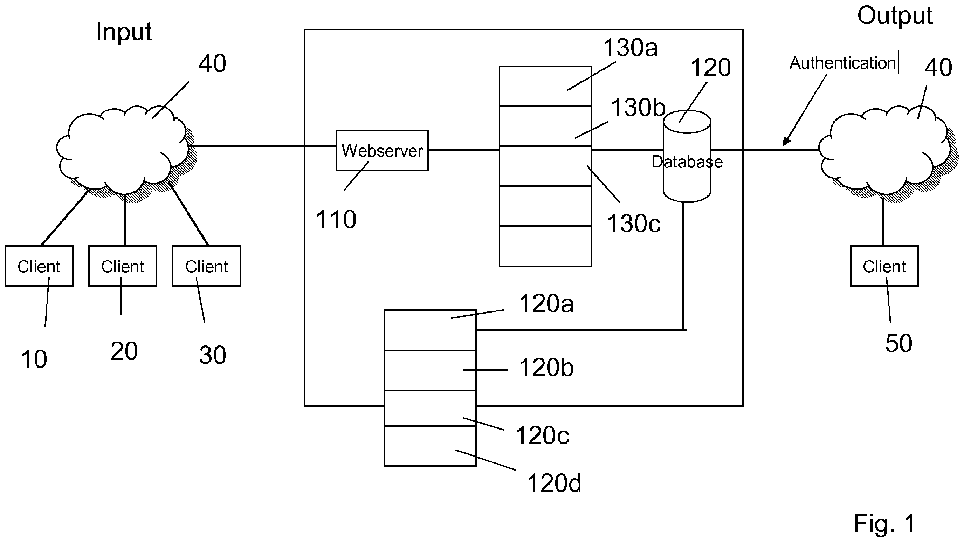

Figur 1 stellt eine Client-Server-Umgebung dar zur Ermittlung und Bereitstellung von Informationen zu einem Bild mittels einer Befragung. Eingabeseitig sind eine Mehrzahl von Clients 10, 20, 30 vorgesehen, welche jeweils einer Befragungsperson zugeordnet sind und über welche die jeweilige Befragungsperson die Metadaten zu einem Bild eingebbar sind. Die Clients, welche je nach Erhebung eine Anzahl von mehreren Tausend umfassen können, sind über ein Computernetz, beispielsweise das Internet 40 an die erfindungsgemäße Vorrichtung 100 zur Ermittlung und Bereitstellung von Informationen zu einem Bild mittels einer Befragung angeschlossen. Darüber hinaus kann diese Vorrichtung 100 wiederum über das Internet 40 an einen Client 50 datenverbunden sein, über welchen Daten und Ergebnisse über die Erhebung abrufbar sind. Die Vorrichtung 100 umfasst im Wesentlichen einen Webserver 110 zur Erfassung der Eingaben der Clients 10 bis 50, und eine Datenverarbeitungseinrichtung 135 zur Bearbeitung und Auswertung der erfassten Metadaten zu dem Bild. Ferner ist eine Datenbank 120 vorgesehen, in welcher insbesondere Erhebungs- und Auswertedaten abgelegt sind, darüber hinaus vorbestimmte Daten wie vorbestimmte Bildabschnitte sowie Daten über die Befragungspersonen.

Die von den Befragungspersonen eingegebenen Daten werden von der Vorrichtung 100 erfasst, d.h. aufgenommen, sie sind in der Darstellung mit dem Bezugszeichen 130a - c angegeben. 130a bezeichnet dabei die eingegebenen Login-Daten, 130b die ausgewählten Bildbereiche sowie die diesbezüglich eingegebenen Metadaten jeweils von jeder Befragungsperson. In der Datenbank 120 sind insbesondere Daten der statistischen Auswertungen über die Erhebung 120a, Daten über die Befragungspersonen 120c, und Daten über vorbestimmte Bildabschnitte 120b abgelegt. In der Datenbank werden auch alle Eingaben jeder Befragungsperson gespeichert. Darüber hinaus können nach dem Beginn der Erhebung und während der Auswertung in Abhängigkeit der bislang eingegangenen Erhebungsdaten Daten über sogenannte nachbestimmte Bildabschnitte definiert werden, welche in Figur 1 mit dem Bezugszeichen 120d angegeben sind.

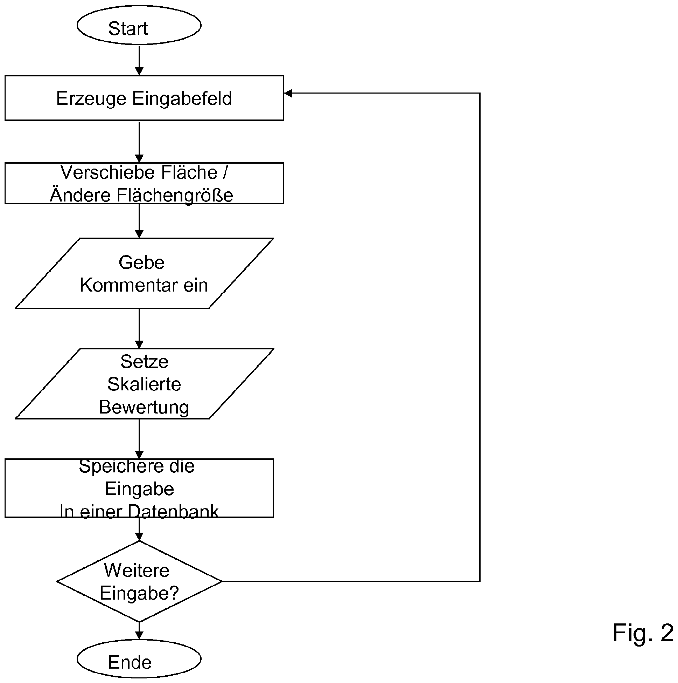

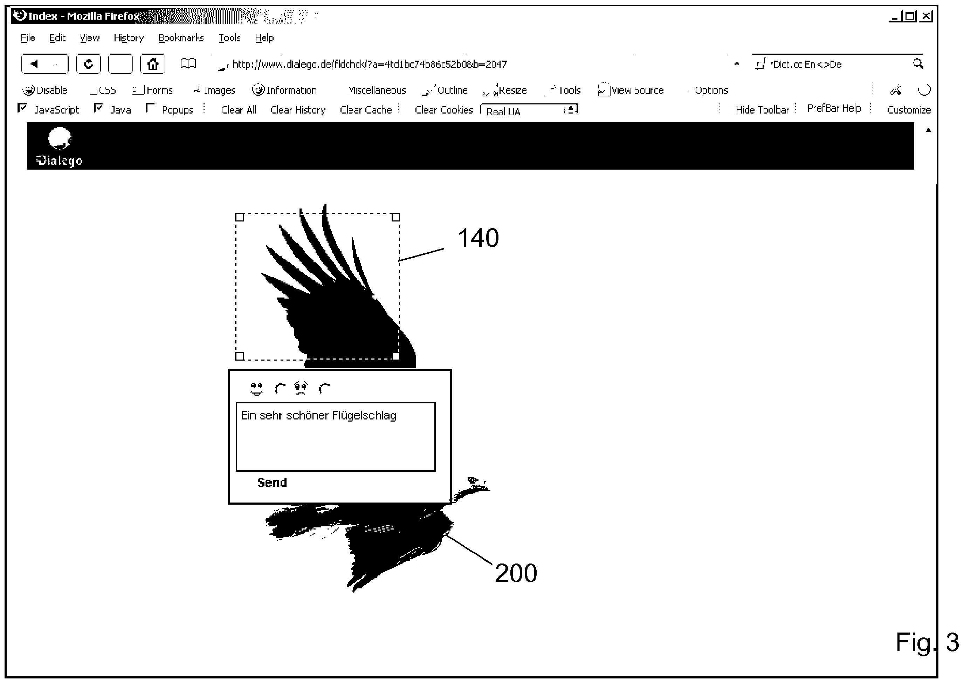

Nachdem sich ein Benutzer in der Erhebungsvorrichtung 100 durch Eingabe seiner jeweiligen Login-Daten angemeldet hat, wird diesem das Bild angezeigt, zu welchem die Befragung durchgeführt wird. Der Ablauf der nachfolgenden Eingabe seitens der jeweiligen Befragungsperson ist in Figur 2 in Form eines Ablaufdiagramms dargestellt. Die reale Situation auf dem Bildschirm der Befragungsperson zeigt Figur 3.

Vorliegend sollen von den Befragungspersonen Metadaten zu der Bilddarstellung 200 eines Adlers eingegeben werden. Nach der automatischen Erzeugung des Eingabefeldes, siehe Figur 2, kann die Befragungsperson einen beliebigen Bereich des Bildes markieren, wodurch automatisch zwei Eingabefelder erzeugt werden, ein Eingabefeld zur Eingabe eines Kommentars, hier "ein sehr schöner Flügelschlag", sowie ein weiteres Eingabefeld, in welchem die Befragungsperson den ausgewählten Bildbereich 140 über die Eingabe eines Skalenwertes bewertet, der aus einer vorgegebenen Anzahl von Skalenwerten ausgewählt werden kann. In dem in Figur 3 dargestellten Beispiel hat der Benutzer aus zwei möglichen Skalenwerten auszuwählen, die durch zwei Smilies repräsentiert werden und für Zustimmung oder Ablehnung stehen.

In einer nicht dargestellten Ausführungsform umfasst die Bewertungsskala mehr als zwei, beispielsweise fünf oder zehn Werte, aus welchen die Befragungsperson dann wieder auswählen kann. Es ist jedoch in weiteren Ausführungsformen möglich, dass die Befragungsperson einen Skalenwert numerisch eingibt, der innerhalb eines vorgegebenen Intervalls liegt. Im Folgenden wird die Eingabe eines Skalenwertes als Abgabe einer "skalierten Bewertung" bezeichnet.

Nachdem beide Metadaten, d.h. der Kommentar als auch die skalierte Bewertung für den frei ausgewählten Bildbereich abgegeben wurden, werden die Eingaben der Befragungspersonen automatisch über den Webserver 110 in der Datenbank 120 abgelegt.

Die Befragungsperson kann daraufhin weitere Bereiche des Bildes auswählen und auch hier die beschriebenen Metadaten eingeben.

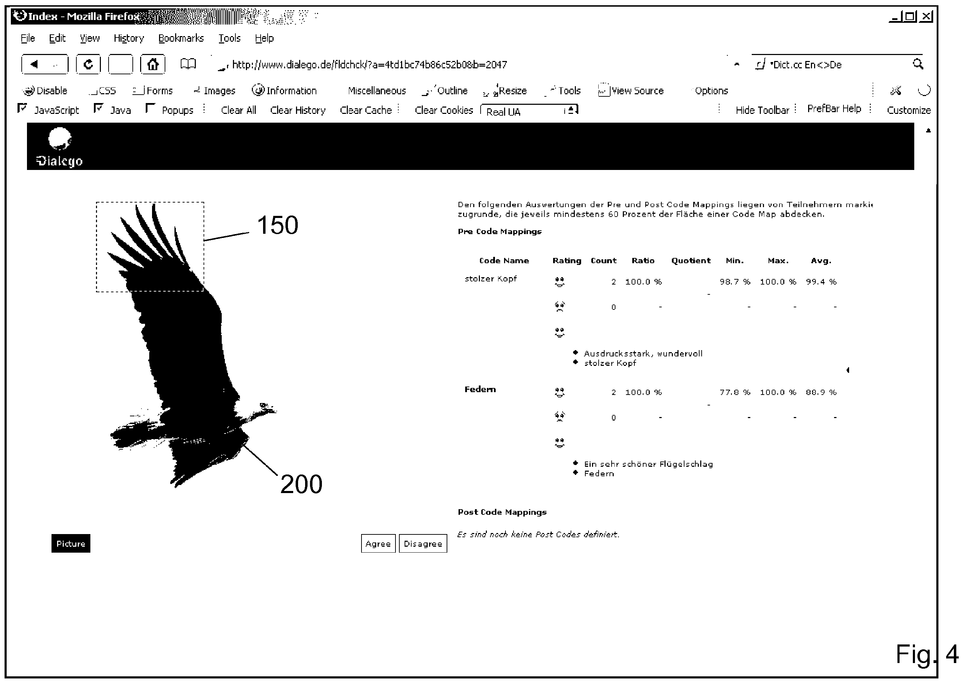

Die diesbezüglichen Eingaben aller Befragungspersonen werden in der Erfassungsvorrichtung 100 gesammelt und in der Datenverarbeitungseinrichtung 135 verarbeitet. Dabei wird für jede Befragungsperson zuerst der frei ausgewählte Bildbereich 140 mit dem in der Datenbank, vor Beginn der Erhebung abgelegten vorbestimmten Bildabschnitten verglichen. Wird in den vorbestimmten Bildabschnitten 150, welche in den Figuren 4 bis 6 als "Pre Code Mappings" bezeichnet werden, eine Übereinstimmung mit dem von der jeweiligen Befragungsperson frei ausgewählten Bildbereich gefunden, dann werden die vom jeweiligen Benutzer zu dem ausgewählten Bildbereich 140 eingegebenen Metadaten dem übereinstimmenden, vorgewählten Bildabschnitt 150 in der Verarbeitungseinheit 135 zugeordnet und der weiteren Auswertung, insbesondere einer statistischen Auswertung der Metadaten zugrunde gelegt. In dem beschriebenen Beispiel wird eine Übereinstimmung des frei ausgewählten Bildbereichs mit einem vorbestimmten Bildabschnitt dann angenommen, wenn der ausgewählte Bildbereich mit mindestens 60% der Fläche des vorbestimmten Bildabschnittes übereinstimmt.

Es versteht sich, dass in anderen Ausführungsformen auch ein unterschiedlicher Grad von Übereinstimmung eingestellt werden kann.

Mit dem beschriebenen Verfahren wird erreicht, dass jede Befragungsperson vollkommen unbeeinflusst die Bereiche in dem vorgestellten Bild auswählen und hierzu Metadaten wie skalierte Werte oder Kommentare eingeben kann. Durch die Übertragung dieser Eingaben für frei ausgewählte Bildbereiche auf vorbestimmte Bildabschnitte für die Eingaben aller Befragungspersonen kann eine Datenbasis für die nachfolgende statistische Auswertung erzeugt werden, bei welcher zumindest in einer Ausführungsform die eingegebenen Metadaten den ermittelten, übereinstimmenden Bildabschnitten zugeordnet werden.

In der in Figur 3 dargestellten Situation hat die betreffende Befragungsperson noch das Metadatum für die skalierte Eingabe durch Mausklick in eines der beiden freien Felder durchzuführen und kann dann die Eingabe abschließen.

Figur 4 zeigt das Ergebnis einer Auswertung der Erhebung, wie es beispielsweise am Client 50 angezeigt werden kann. Dargestellt ist wiederum auf der linken Seite das Bild 200, zu welchem die Erhebung durchgeführt wird sowie auf der rechten Seite tabellarisch angegebene Auswertedaten der Erhebung.

In der ersten Spalte sind zwei vorbestimmte Bildabschnitte angegeben, welche mit "stolzer Kopf" bzw. "Federn" bezeichnet sind. Im Bild des Adlers ist der zweite vorbestimmte Bildabschnitt 150 "Federn" gekennzeichnet. Wie ein Vergleich mit Figur 3 zeigt, ist dieser vorbestimmte Bildabschnitt 150 unterschiedlich zu dem von der Befragungsperson ausgewählten Bildbereich 140. Aufgrund der flächenmäßigen Übereinstimmung > 60% wurden die von der Befragungsperson in Figur 3 eingegebenen Metadaten dem vorbestimmten Bildabschnitt 150 "Federn" zugeordnet, d.h. sie erscheinen in der tabellarischen Auswertedarstellung unter dem genannten vorbestimmten Bildabschnitt. Wie aus Figur 4 hervorgeht, wurde der vorbestimmte Bildabschnitt zweimal Eingaben von Befragungspersonen zugeordnet, wobei einmal eine 100% Übereinstimmung in der Fläche und bei der Eingabe der zweiten Befragungsperson eine Übereinstimmung von 77,8% vorlag, sodass sich eine mittlere Übereinstimmung von 88,9% ergibt. Beide Befragungspersonen haben ausweislich der Tabelle den Flügelabschnitt in ihrer skalierten Eingabe als positiv angegeben. In den beiden letzten Zeilen, welche dem Bildabschnitt 150 "Federn" zugeordnet sind, sind die von den beiden Befragungspersonen eingegebenen Kommentare "ein sehr schöner Flügelschlag" bzw. "Federn" angegeben. Ähnliche Daten wurden für den zweiten vorbestimmten Bildabschnitt "stolzer Kopf" ermittelt und dargestellt.

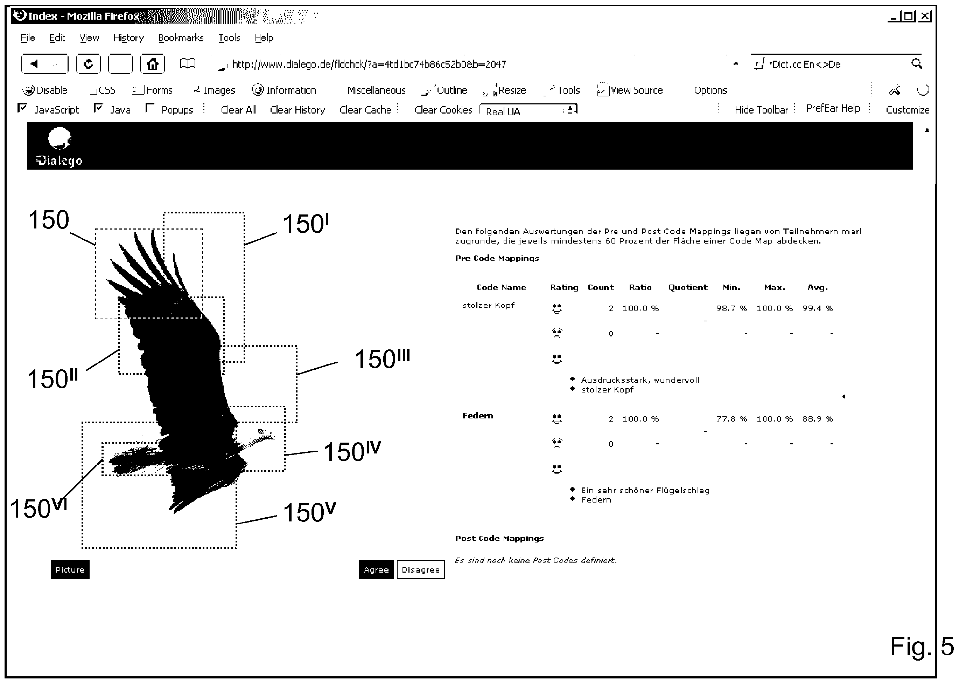

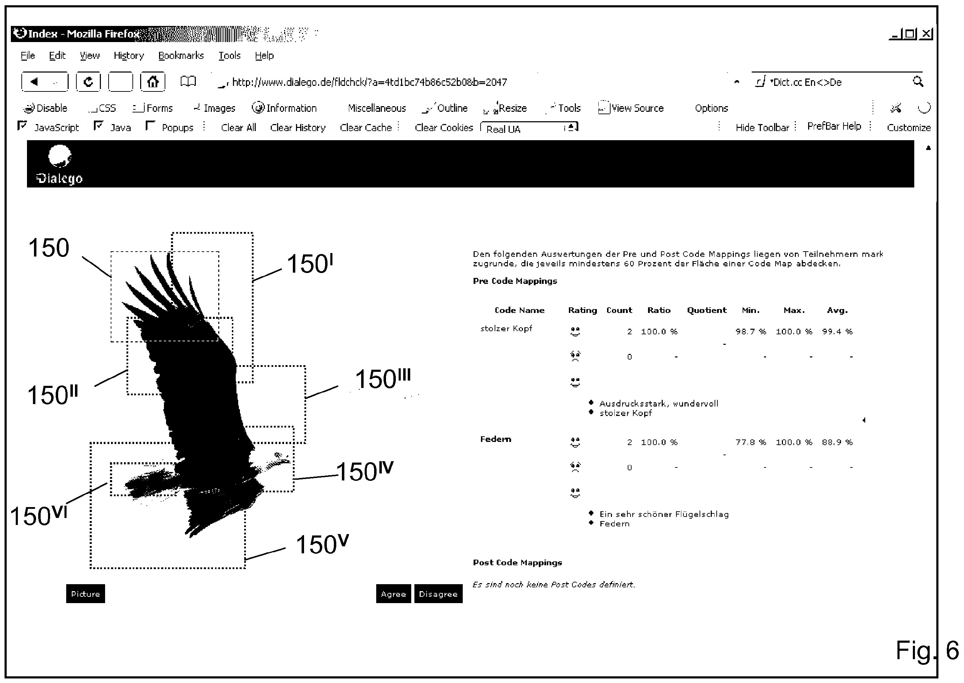

In den Figuren 5, 6 sind die vorbestimmten Bildabschnitte 150, 150ⁱ, 150ⁱⁱ, 150ⁱⁱⁱ, 150^{iv}, 150^{v}, 150^{vi} gestrichelt angegeben, welche von der Mehrzahl der Befragungspersonen in der skalierten Bewertung (im Beispiel zwei mögliche Skalenwerte) positiv (Figur 5) bzw. negativ (Figur 6) bewertet wurden.

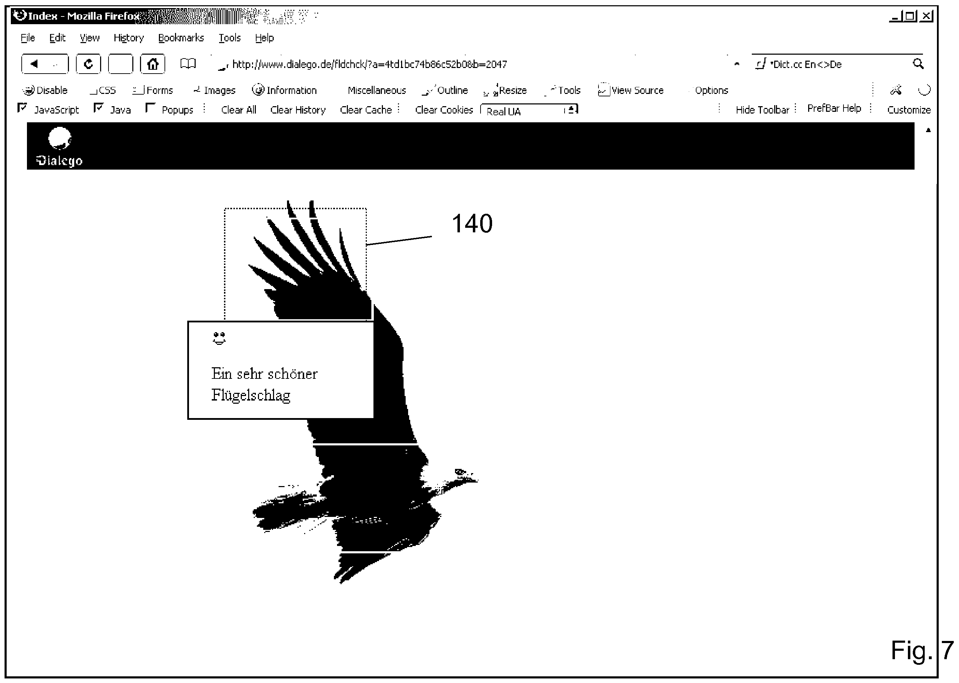

Am Client 50 sind auch die jeweiligen Eingaben einzelner Befragungspersonen abfragbar. Eine solche Situation zeigt Figur 7, welche mit der die in Figur 3 gezeigte Eingabesituation korrespondiert.

In der beschriebenen Ausführungsform ist vorgesehen, dass während oder nach der Erhebung, d.h. nach der Erfassung, der durch die Befragungspersonen eingegebenen Metadaten zu Bildbereichen, für die Auswertung nachbestimmte Bildabschnitte festgelegt werden. Diese nachbestimmten Bildabschnitte ersetzen dann die in der Auswertung die oben beschriebenen vorbestimmten Bildabschnitte, sodass dann die von den jeweiligen Befragungspersonen frei ausgewählten Bildbereichen mit dem bzw. den nachbestimmten Bildabschnitten verglichen werden und bei Übereinstimmung die zu einem ausgewählten Bildbereich eingegebenen Metadaten dem übereinstimmenden nachbestimmten Bildabschnitt zugeordnet werden.

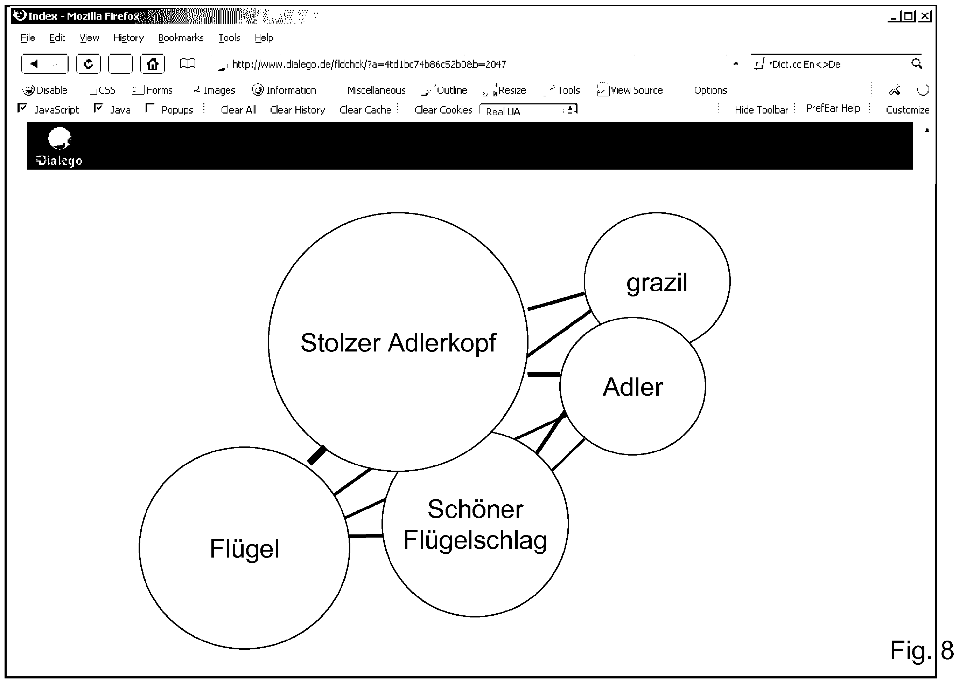

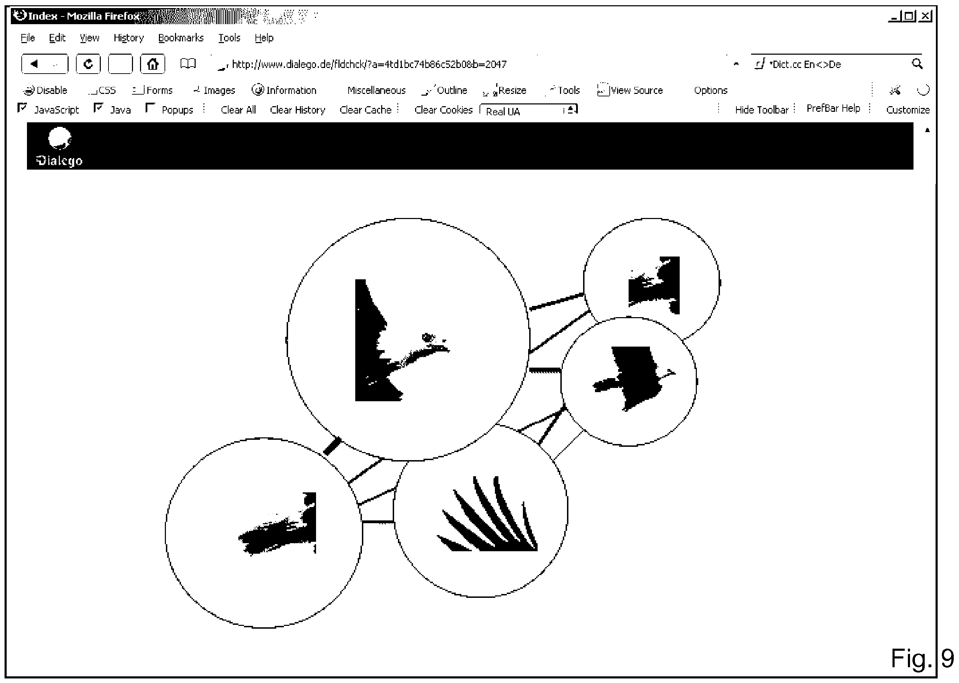

Erfindungsgemäß können auch noch weitere Darstellungsarten der erhobenen bzw. ausgewählten Informationen, wie sie beispielsweise am Client 50 dargestellt werden können, vorteilhaft sein. Entsprechende Beispiele zeigen die Figuren 8 und 9. In Figur 8 sind alle Kommentare, welche für vorbestimmte Bildabschnitte abgegeben wurden in Form eines Stichworts ("Tag") jeweils in einem Kreis angegeben, wobei der Durchmesser des jeweiligen Kreises mit der Angabehäufigkeit des Tags über alle Befragungspersonen korrespondiert.

Figur 9 zeigt die gleiche Darstellung mit dem Unterschied, dass die jeweiligen Bildabschnitte selbst in dem zugehörigen Kreisen dargestellt sind.

In einer nicht gezeigten Darstellung ist vorgesehen, bei einer skalierten Bewertungseingabe für jeden vorbestimmten bzw. nachbestimmten Bildabschnitt aus den eingegebenen Skalenwerten einen Wert für eine Kenngröße, beispielsweise einen gemittelten Skalenwert zu berechnen und die Werte der Kenngröße farbcodiert innerhalb des Bildes anzugeben. Besteht beispielsweise bei der Eingabe die Wahl zwischen zwei möglichen Skalenwerten, wie positiv/negativ, kann für einen oder beide Skalenwerte ein Wert einer Kenngröße sowie der Wert einer relativen Häufigkeit berechnet werden, wobei für jeden vor- bzw. nachbestimmten Bildabschnitt ein derartiger Häufigkeitswert ermittelt wird. Das Auswerteergebnis lässt sich beispielsweise direkt im Bild darstellen, wenn die Häufigkeitswerte der Bildabschnitte farbcodiert dargestellt sind.

Darüber hinaus besteht auch die Möglichkeit, über den Client 50 Filterparameter für die Auswertung anzugeben, um beispielsweise die Eingabedaten bestimmter Befragungspersonen zu selektieren, sodass die Auswertung entsprechend differenziert werden kann.

### Bezugszeichenliste

- 10: Client
- 20: Client
- 30: Client
- 40: Internet
- 50: Client
- 100: Erfassungsvorrichtung
- 110: Webserver
- 120: Datenbank
- 120a: Statistische Auswertedaten
- 120b: Daten für vorbestimmte Bildabschnitte
- 120c: Daten über Personenangaben
- 120d: Daten über nachbestimmte Bildabschnitte
- 130a: Login-Daten
- 130b: Daten über ausgewählte Bildbereiche
- 130c: Metadaten
- 135: Datenverarbeitungseinrichtung
- 140: Ausgewählter Bildbereich
- 150, 150, 150ⁱ, 150ⁱⁱ, 150ⁱⁱⁱ, 150^{iv}, 150^{v}, 150^{vi}: Vorbestimmter Bildabschnitt
- 200: Bild

## Patentansprüche

1. Verfahren zur Ermittlung und Bereitstellung von Information zu einem Bild in einer Befragung, umfassend:
- Computergestütztes Anzeigen des Bildes einer Mehrzahl von Befragungspersonen;
- Computergestützte Erfassung der Eingabe von Metadaten zu dem Bild, welche durch die Mehrzahl von Befragungspersonen voneinander unabhängig eingegeben werden, und Speicherung der eingegebenen Metadaten;
**dadurch gekennzeichnet, dass**
eine computergestützte statistische Auswertung der gespeicherten Metadaten zu dem Bild durchgeführt wird, und dass
a) das Bild in vor- und/oder nachbestimmte Bildabschnitte (150, 150ⁱ, 150ⁱⁱ, 150ⁱⁱⁱ, 150^{iv}, 150^{v}, 150^{vi}) unterteilt wird, wobei diese Bildabschnitte gespeichert werden,
b) wobei die Eingabe eines jeden Metadatums zu einem, von einer Befragungsperson frei auswählbaren Bereich des Bildes erfasst und gespeichert wird und wobei das Metadatum ein Skalenwert ist, wobei zu einem ausgewählten Bildbereich mehrere Metadaten jeweils in Form eines Skalenwertes eingegeben, erfasst und gespeichert werden,
c) wobei der frei ausgewählte Bildbereich mit den in Bezug auf den Beginn der Befragung vor- oder nachbestimmten, gespeicherten Bildabschnitten verglichen wird und beim Auftreten einer solchen flächenmäßigen Übereinstimmung, dass der frei ausgewählte Bildbereich mindestens 60 % der Fläche eines vor- oder nachbestimmten Bildabschnitts (150, 150ⁱ, 150ⁱⁱ, 150ⁱⁱⁱ, 150^{iv}, 150^{v}, 150^{vi}) umfasst, dem übereinstimmenden, vor- oder nachbestimmten Bildabschnitt (150, 150ⁱ, 150ⁱⁱ, 150ⁱⁱⁱ, 150^{iv}, 150^{v}, 150^{vi}) das zu dem frei ausgewählten Bildbereich gespeicherte Metadatum zugeordnet wird, wodurch eine Datenbasis für die statistische Auswertung erzeugt wird, und
d) wobei Daten der statistischen Auswertungen (120a) zusammen mit Daten über die vor- und/oder nachbestimmten Bildabschnitte (120b, 120d) in einer Datenbank (120) gespeichert werden, und wobei die statistische Auswertung der gespeicherten Metadaten zu dem Bild mittels der Datenbasis, bei der die zu dem Bild gespeicherten Metadaten den vor- und/oder nachbestimmten Bildabschnitten (150, 150ⁱ, 150ⁱⁱ, 150ⁱⁱⁱ, 150^{iv}, 150^{v}, 150^{vi}) zugeordnet sind, durchgeführt wird, wobei aus den Eingaben aller Metadaten zu den jeweiligen Bildabschnitten (150, 150ⁱ, 150ⁱⁱ, 150ⁱⁱⁱ, 150^{iv}, 150^{v}, 150^{vi}) ein Datensatz berechnet wird, welcher einem jeden Bildabschnitt (150, 150ⁱ, 150ⁱⁱ, 150ⁱⁱⁱ, 150^{iv}, 150^{v}, 150^{vi}) einen Wert einer statistischen Kenngröße zuordnet.

2. Verfahren nach Anspruch 1, **dadurch gekennzeichnet,** das s die durch die statistische Auswertung ermittelten Informationen zu dem Bild visuell dargestellt werden.

3. Verfahren nach Anspruch 1 oder 2, **dadurch gekennzeichnet,** das s das Metadatum aus zwei möglichen Skalenwerten ausgewählt wird und zu jedem Bildabschnitt für beide möglichen Skalenwerte ein Wert einer jeweiligen Kenngröße berechnet wird.

4. Verfahren nach Anspruch 3, **dadurch gekennzeichnet, dass** die Werte der Kenngröße farbcodiert werden und eine Topologie des Bildes berechnet wird, in welcher die Werte der Kenngröße an jedem Bildabschnitt farbcodiert sind.

5. Verfahren nach einem der Ansprüche 1 bis 4, **dadurch gekennzeichnet, dass** ein Datensatz berechnet wird, welcher jedem vor- oder nachbestimmten Bildabschnitt (150, 150ⁱ, 150ⁱⁱ, 150ⁱⁱⁱ, 150^{iv}, 150^{v}, 150^{vi}) eine Grö-βenskalierung zuordnet, welche von der jeweiligen Auswahlhäufigkeit des Bildabschnittes abhängt.

6. Verfahren nach einem der Ansprüche 1 bis 5, **dadurch gekennzeichnet, dass** zumindest ein nachbestimmter, zusammenhängender Bildabschnitt festgelegt wird, der mit einer größeren als eine vorgegebene Wahrscheinlichkeit von ausgewählten, insbesondere von allen ausgewählten Bildbereichen umfasst ist.

7. Verfahren nach einem der Ansprüche 2 bis 6, **dadurch gekennzeichnet, dass** für die Darstellung der ermittelten Informationen eine Tabelle bereitgestellt wird, welche für vorbestimmte Bildabschnitte zugeordnete Metadaten, deren Absolut-, Relativhäufigkeiten und/oder Verhältnisse angibt.

8. Verfahren nach einem der Ansprüche 1 bis 7, **dadurch gekennzeichnet,** das s die Tabelle für nachbestimmte Bildabschnitte zugeordnete Metadaten in Form von Skalenwerten, deren Absolut-, Relativhäufigkeiten und/oder Verhältnisse angibt.

9. Verfahren nach einem der Ansprüche 1 bis 8, **dadurch gekennzeichnet, dass** für eine Befragungsperson personenbezogene Parameter gespeichert werden.

10. Verfahren nach Anspruch 9, **dadurch gekennzeichnet, dass** eine Filterfunktion bereitgestellt wird zum Festlegen vorbestimmter, den jeweiligen Befragungspersonen zugeordnete Parameter, womit die Befragungspersonen bestimmt werden, deren Eingaben für die Darstellung ausgewertet werden.

11. Vorrichtung zur Ermittlung und Bereitstellung von Information zu einem Bild in einer Befragung, umfassend:
- Mittel (100) zur Erfassung von Metadaten zu dem Bild, welche durch eine Mehrzahl von Befragungspersonen voneinander unabhängig eingegeben werden, und einen Speicher zur Speicherung der eingegebenen Metadaten;
**dadurch gekennzeichnet, dass** die Vorrichtung eine Datenverarbeitungseinrichtung (135) zur Durchführung einer statistischen Auswertung der gespeicherten Metadaten zu dem Bild umfasst, wobei
a) in dem Speicher Daten (120b) zur Festlegung von in Bezug auf den Beginn der Befragung vor- und/oder nachbestimmten Abschnitten (150, 150ⁱ, 150ⁱⁱ, 150ⁱⁱⁱ, 150^{iv}, 150^{v}, 150^{vi}) des Bildes abgelegt sind,
b) wobei jedes gespeicherte Metadatum in dem Speicher einem, von einer Befragungsperson frei auswählbaren Bereich des Bildes zugeordnet ist, und wobei das Metadatum ein Skalenwert ist wobei zu einem ausgewählten Bildbereich mehrere Metadaten jeweils in Form eines Skalenwertes eingegeben, erfasst und gespeichert werden,
c) und wobei die Datenverarbeitungseinrichtung ausgebildet ist zum Vergleichen des frei ausgewählten Bildbereichs (140) mit den vor- und/oder nachbestimmten Abschnitten des Bildes und zum Auffinden des vor- und/oder nachbestimmten Bildabschnitts (150, 150ⁱ, 150ⁱⁱ, 150ⁱⁱⁱ, 150^{iv}, 150^{v}, 150^{vi}), welcher mit dem frei ausgewählten Bildbereich (140) eine solche flächenmäßige Übereinstimmung besitzt, dass der frei ausgewählte Bildbereich mindestens 60 % der Fläche eines vor- oder nachbestimmten Bildabschnitts (150, 150ⁱ, 150ⁱⁱ, 150ⁱⁱⁱ, 150^{iv}, 150^{v}, 150^{vi}) umfasst, wobei die Datenverarbeitungseinrichtung (135) ausgebildet ist zum Zuordnen des für einen frei ausgewählten Bildbereich gespeicherten Metadatums zum übereinstimmenden, vor- oder nachbestimmten Bildabschnitts (150, 150ⁱ, 150ⁱⁱ, 150ⁱⁱⁱ, 150^{iv}, 150^{v}, 150^{vi}) in dem Speicher, wodurch sie eine Datenbasis für die statistische Auswertung erzeugt, und
d) wobei Daten der statistischen Auswertungen (120a) zusammen mit Daten über die vor- und/oder nachbestimmten Bildabschnitte (120b, 120d) in einer Datenbank (120) gespeichert werden, und wobei die Datenverarbeitungseinrichtung (135) die statistische Auswertung der erfassten Metadaten zu dem Bild mittels der Datenbasis, bei der die zu dem Bild gespeicherten Metadaten den vor- und/oder nachbestimmten Bildabschnitten zugeordnet sind, durchführt, wobei aus den Eingaben aller Metadaten zu den jeweiligen Bildabschnitten (150, 150ⁱ, 150ⁱⁱ, 150ⁱⁱⁱ, 150^{iv}, 150^{v}, 150^{vi}) ein Datensatz berechnet wird, welcher einem jeden Bildabschnitt (150, 150ⁱ, 150ⁱⁱ, 150ⁱⁱⁱ, 150^{iv}, 150^{v}, 150^{vi}) einen Wert einer statistischen Kenngröße zuordnet.

12. Vorrichtung nach Anspruch 11, **dadurch gekennzeichnet, dass** Auswertedaten in einer Datenbank (120) abspeichert.

13. Vorrichtung nach einem der Ansprüche 11 oder 12, **dadurch gekennzeichnet, dass** mehrere, jeweils einer Befragungsperson zugeordnete Clients (10, 20, 30) über ein Computernetz (40) an einen Server (110) angeschlossen sind, welcher mit der Datenbank (120) und der Datenverarbeitungseinrichtung (135) verbunden ist.

14. Vorrichtung nach einem der Ansprüche 11 bis 13, **dadurch gekennzeichnet, dass** zumindest ein Client (50) über ein Computernetz (40) an den Server angeschlossen ist, an den Auswertedaten der statistischen Auswertung über die erfassten Metadaten zu dem Bild übermittelbar sind.

15. Vorrichtung nach Anspruch 14, **dadurch gekennzeichnet, dass** von dem Auswertedaten empfangenden Client (50) Auswerteparameter wie Filterparameter oder Daten zur Festlegung von vor- und/oder nachbestimmte Bildabschnitte (150, 150ⁱ, 150ⁱⁱ, 150ⁱⁱⁱ, 150^{iv}, 150^{v}, 150^{vi}) an den Server übermittelbar sind.

## Claims

1. Method for detecting and providing information about a picture in a survey, comprising:
- computer-assisted displaying of the picture to a plurality of respondents;
- computer-assisted detection of the input of metadata about the picture which are input by the plurality of respondents independently of one another and storing the input metadata;
**characterized in that** a computer-assisted statistical analysis of the stored metadata about the picture is carried out and that
a) the picture is divided into pre- and/or post-determined picture portions (150, 150ⁱ, 150ⁱⁱ, 150ⁱⁱⁱ, 150^{iv}, 150^{v}, 150^{vi}) and these picture portions are stored,
b) the input of each meta-datum relating to a region of the image that is freely selectable by a respondent is detected and stored, wherein the meta-datum is a scale value, and several metadata relating to a selected picture region are each input, detected and stored in the form of a scale value,
c) the freely selected picture portion is compared with stored picture portions that have been pre- and/or post-determined with respect to the beginning of the survey and, when a match in area occurs such that the freely selectable picture region at least comprises 60% of the area of a pre- and/or post-determined picture portion (150, 150ⁱ, 150ⁱⁱ, 150ⁱⁱⁱ, 150^{iv}, 150^{v}, 150^{vi}), the meta-datum stored to the freely selectable picture region is assigned to said matching pre- and/or post-determined picture portion (150, 150ⁱ, 150ⁱⁱ, 150ⁱⁱⁱ, 150^{iv}, 150^{v}, 150^{vi}), whereby a database for the statistical analysis is created, and
d) the data from the statistical analyses (120a) are stored in a database (120) together with data on the pre- and/or post-determined picture portions (120b, 120d), and the statistical analysis of the metadata stored on the picture is performed using the database in which the metadata stored to the picture are assigned to the pre- and/or post-determined picture portions (150, 150ⁱ, 150ⁱⁱ, 150ⁱⁱⁱ, 150^{iv}, 150^{v}, 150^{vi}), wherein a data set is calculated from the inputs of all metadata relating to the respective picture portions (150, 150ⁱ, 150ⁱⁱ, 150ⁱⁱⁱ, 150^{iv}, 150^{v}, 150^{vi}), which data set assigns a value of a statistical parameter to each picture portion (150, 150ⁱ, 150ⁱⁱ, 150ⁱⁱⁱ, 150^{iv}, 150^{v}, 150^{vi}).

2. Method according to claim 1, **characterized in that** the information about the picture obtained by the statistical analysis is visually represented.

3. Method according to claim 1 or 2, **characterized in that** the meta-datum is chosen from two possible scale values and that a value of a respective parameter is calculated to each picture portion for both possible scale values.

4. Method according to claim 3, **characterized in that** the values of the parameter are color-coded and a topography of the picture is calculated in which the values of the parameters at every picture portion are color-coded.

5. Method according to one of the claims 1 to 4, **characterized in that** a data set is calculated that assigns a size scale to each pre- and/or post-determined picture portion (150, 150ⁱ, 150ⁱⁱ, 150ⁱⁱⁱ, 150^{iv}, 150^{v}, 150^{vi}), the size scale depending on the respective frequency of selection of the picture portion.

6. Method according to one of the claims 1 to 5, **characterized in that** at least one pre- and/or post-determined contiguous picture portion is determined which is comprised by selected and particularly by all selected picture portions with a probability higher than a predetermined probability.

7. Method according to one of the claims 2 to 6, **characterized in that** for the representation of determined information, a table is provided that shows metadata assigned for predetermined picture portions, the absolute frequencies, the relative frequencies and/or the ratios thereof.

8. Method according to one of the claims 1 to 7, **characterized in that** the table shows assigned metadata for post-determined picture portions in the form of scale values, absolute frequencies, relative frequencies and/or the ratios thereof.

9. Method according to one of the claims 1 to 8, **characterized in that** personal parameters are stored for a respondent.

10. Method according to claim 9, **characterized in that** a filter function is provided for determining predefined parameters assigned to the respective respondents, by which the respondents are determined whose inputs are analyzed for representation.

11. Device for detecting and providing information about a picture in a survey, comprising:
- means (100) for the collection of metadata to the picture which are input by a plurality of respondents independently of one another, and a memory for storing the input metadata;
**characterized in that** the device comprises a data processing device (135) for performing a statistical analysis of the metadata stored to a picture, wherein
a) data (120b) for determining portions of the picture (150, 150ⁱ, 150ⁱⁱ, 150ⁱⁱⁱ, 150^{iv}, 150^{v}, 150^{vi}) that are pre- and/or post-determined with respect to the beginning of the survey are stored in the memory,
b) each stored meta-datum in the memory is assigned to a region of the picture which is freely selectable by the respondent and wherein the meta-datum is a scale value, wherein several metadata are respectively input, detected and stored in the form of a scale value to a selected picture portion,
c) wherein the data processing device is configured for comparing the freely selected picture portion (140) to the pre- and post-determined portions of the picture and for locating the pre- and/or post-determined picture portion (150, 150ⁱ, 150ⁱⁱ, 150ⁱⁱⁱ, 150^{iv}, 150^{v}, 150^{vi}) that presents a matching in area such that the freely selectable picture portion comprises at least 60% of the area of a pre- or post-determined picture portion (150, 150ⁱ, 150ⁱⁱ, 150ⁱⁱⁱ, 150^{iv}, 150^{v}, 150^{vi}), wherein the data processing device (135) is configured for assigning the meta-datum stored for a freely selected picture portion to the matching pre- or post-determined picture portion (150, 150ⁱ, 150ⁱⁱ, 150ⁱⁱⁱ, 150^{iv}, 150^{v}, 150^{vi}) in the memory, whereby it creates a data base for the statistical analysis and
d) wherein data from the statistical analysis (120a) are stored in a database (120) together with data on the pre- and/or post-determined picture portions (120b, 120d) and wherein the data processing device (135) performs the statistical analysis of the collected metadata to the picture using the data base in which the metadata stored to the picture are assigned to the pre- and/or post-determined picture portions, wherein a data set is calculated from the inputs of all metadata to the respective picture portions (150, 150ⁱ, 150ⁱⁱ, 150ⁱⁱⁱ, 150^{iv}, 150^{v}, 150^{vi}) which assigns a value of a statistical parameter to each picture portion (150, 150ⁱ, 150ⁱⁱ, 150ⁱⁱⁱ, 150^{iv}, 150^{v}, 150^{vi}).

12. Device according to claim 11, **characterized in that** it stores data from the analysis in a database (120).

13. Device according to one of the claims 11 or 12, **characterized in that** several clients (10, 20, 30) assigned to a respective respondent are connected via a computer network (40) to a server (110) that is connected to the database (120) and to the data processing device (135).

14. Device according to one of the claims 11 to 13, **characterized in that** at least one client (50) is connected via a computer network (40) to the server to which analysis data of the statistical analysis on the metadata collected to the picture can be transmitted.

15. Device according to claim 14, **characterized in that** analysis data such as filtering parameters or data for determining pre- and/or post-determined picture portions (150, 150ⁱ, 150ⁱⁱ, 150ⁱⁱⁱ, 150^{iv}, 150^{v}, 150^{vi}) can be transmitted from the client (50) receiving analysis data to the server.

## Revendications

1. Procédé de détermination et de préparation d'informations sur une image dans une enquête, comprenant:
- afficher, de manière assistée par ordinateur, ladite image à une pluralité de répondants;
- détecter, de manière assistée par ordinateur, l'entrée des métadonnées relatives à l'image entrées par des répondants indépendamment les uns des autres et mémoriser les métadonnées entrées;
**caractérisé par le fait qu'**on effectue, de manière assistée par ordinateur, une analyse statistique sur les métadonnées stockées relatives à l'mage et que
a) l'image est divisée en parties d'image préalablement et/ou ultérieurement définies (150, 150ⁱ, 150ⁱⁱ, 150ⁱⁱⁱ, 150^{iv}, 150^{v}, 150^{vi}), ces parties d'image étant stockées,
b) l'entrée de chaque métadonnée relative à une partie de l'image qui peut être librement sélectionnée par un répondant est détectée et stockée, et la métadonnée est une valeur d'échelon, et plusieurs métadonnées sont respectivement entrées, détectées et stockées sous la forme d'une valeur d'échelon relative à une partie d'image sélectionnée,
c) la partie d'image librement sélectionnée est comparée avec les parties d'image stockées préalablement et/ou ultérieurement définies par rapport au début de l'enquête et, en cas d'occurrence d'une concordance de superficie de telle sorte que la partie d'image librement sélectionnée couvre au moins 60% de la superficie d'une partie d'image préalablement et/ou ultérieurement définie (150, 150ⁱ, 150ⁱⁱ, 150ⁱⁱⁱ, 150^{iv}, 150^{v}, 150^{vi}), la métadonnée stockée relative à la partie d'image librement sélectionnée est associée à la partie d'image concordante préalablement et/ou ultérieurement définie (150, 150ⁱ, 150ⁱⁱ, 150ⁱⁱⁱ, 150^{iv}, 150^{v}, 150^{vi}) moyennant quoi une base de données pour l'analyse statistique est générée, et
d) les données de l'analyse statistique (120a) sont stockées dans une base de données (120) en même temps que les données relatives aux parties d'image préalablement et/ou ultérieurement définies (120b, 120d), et l'analyse statistique des métadonnées stockées relatives à l'image est effectué moyennant la base de données dans laquelle les métadonnées stockées relatives à l'image sont associées aux parties d'image préalablement et/ou ultérieurement définies (150, 150ⁱ, 150ⁱⁱ, 150ⁱⁱⁱ, 150^{iv}, 150^{v}, 150^{vi}), et un ensemble de données associant à chaque partie d'image (150, 150ⁱ, 150ⁱⁱ, 150ⁱⁱⁱ, 150^{iv}, 150^{v}, 150^{vi}) une valeur d'un paramètre statistique est calculée sur la base des entrées de toutes les métadonnées relatives aux parties d'image respectives (150, 150ⁱ, 150ⁱⁱ, 150ⁱⁱⁱ, 150^{iv}, 150^{v}, 150^{vi}).

2. Procédé selon la revendication 1, **caractérisé en ce que** l'information sur l'image obtenue par l'analyse est présentée sous forme visuelle.

3. Procédé selon la revendication 1 ou 2, **caractérisé en ce que** la métadonnée est choisie parmi deux valeurs d'échelon possibles et une valeur d'un paramètre respectif est calculée pour chaque partie d'image et pour les deux valeurs d'échelon possibles.

4. Procédé selon la revendication 3, **caractérisé en ce que** les valeurs du paramètre sont codées en couleur et une topologie de l'image est calculée dans laquelle les valeurs du paramètre sur chaque partie d'image sont codées en couleur.

5. Procédé selon l'une des revendications 1 à 4, **caractérisé en ce que** un ensemble de données est calculé qui attribue à chaque partie d'image préalablement et/ou ultérieurement définie (150, 150ⁱ, 150ⁱⁱ, 150ⁱⁱⁱ, 150^{iv}, 150^{v}, 150^{vi}) une mise à l'échelle qui dépend de la fréquence de sélection respective de la partie d'image.

6. Procédé selon l'une des revendications 1 à 5, **caractérisé en ce qu'**au moins une partie d'image cohérente et ultérieurement définie est déterminée, partie d'image qui est comprise dans des parties d'image sélectionnées, en particulier dans toutes les parties d'image sélectionnées, avec une probabilité plus grande qu'une probabilité prédéterminée.

7. Procédé selon l'une des revendications 2 à 6, **caractérisé en ce qu'**une table pour la représentation des informations obtenues est établie, table qui indique des métadonnées associées aux parties d'image prédéterminées, les fréquences absolues, les fréquences relatives et/ou les rapports de celles-ci.

8. Procédé selon l'une des revendications 1 à 7, **caractérisé en ce que** la table indique des métadonnées pour des parties d'image ultérieurement définies sous la forme des valeurs de l'échelon, les fréquences absolues, les fréquences relatives et/ou les rapports des celles-ci.

9. Procédé selon l'une des revendications 1 à 8, **caractérisé en ce que** les paramètres à caractère personnel d'un répondant sont stockés.

10. Procédé selon la revendication 9, **caractérisé en ce qu'**une fonction de filtrage est fourni pour déterminer des paramètres prédéfinis et associés aux répondants respectifs, avec lesquels les répondants sont déterminés dont les entrées sont analysées pour la représentation.

11. Dispositif de détermination et de préparation d'informations sur une image dans une enquête, comprenant:
- des moyens (100) pour collecter des métadonnées sur une image qui sont entrées par une pluralité de répondants indépendamment les uns des autres, et une mémoire pour stocker les métadonnées entrées;
**caractérisé en ce que** le dispositif comporte un dispositif de traitement de données (135) pour l'exécution d'une analyse statistique des métadonnées stockées relatives à l'image, dans lequel
a) des données (120b) pour la détermination des parties d'image (150, 150ⁱⁱ, 150ⁱⁱⁱ, 150^{iv}, 150^{v}, 150^{vi}) préalablement et/ou ultérieurement définies par rapport au début de l'enquête sont placées dans la mémoire,
b) dans la mémoire, chaque métadonnée stockée est associée à une partie de l'image qui peut être librement sélectionnée par un répondant et la métadonnée est une valeur d'échelon et plusieurs métadonnées relatives à une partie d'image sélectionnée sont respectivement entrées, détectées et stockées sous la forme d'une valeur d'échelon,
c) et le dispositif de traitement de données est conçu pour comparer la partie d'image (140) librement sélectionnée avec les parties de l'image préalablement et/ou ultérieurement définies et pour localiser la partie d'image préalablement et/ou ultérieurement définie (150, 150ⁱⁱ, 150ⁱⁱⁱ, 150^{iv}, 150^{v}, 150^{vi}) qui présente une correspondance en superficie avec la partie d'image librement sélectionnée (140), de telle sorte que la partie d'image librement sélectionnée couvre au moins 60% de la superficie d'une partie d'image préalablement et/ou ultérieurement définie (150, 150ⁱⁱ, 150ⁱⁱⁱ, 150^{iv}, 150^{v}, 150^{vi}), dans lequel le dispositif de traitement de données (135) est conçu pour associer la métadonnée mémorisée pour une partie d'image librement sélectionnée à la partie d'image (150, 150ⁱⁱ, 150ⁱⁱⁱ, 150^{iv}, 150^{v}, 150^{vi}) cohérente préalablement et/ou ultérieurement définie dans la mémoire, permettant audit dispositif d'établir une base de données pour l'analyse statistique et
d) les données des analyses statistiques (120a) sont stockées dans une base de données (120) en même temps avec des données sur les parties d'image (120b, 120d) préalablement et/ou ultérieurement définies, et le dispositif de traitement de données (135) procède à l'analyse statistique des métadonnées stockées relatives à l'image moyennant la base de données dans laquelle les métadonnées stockées relatives à l'image sont associées aux parties d'image préalablement et/ou ultérieurement définies (150, 150ⁱ, 150ⁱⁱ, 150ⁱⁱⁱ, 150^{iv}, 150^{v}, 150^{vi}), et un ensemble de données associant à chaque partie d'image (150, 150ⁱ, 150ⁱⁱ, 150ⁱⁱⁱ, 150^{iv}, 150^{v}, 150^{vi}) une valeur d'un paramètre statistique est calculé sur la base des entrées de toutes les métadonnées relatives aux parties d'image respectives (150, 150ⁱ, 150ⁱⁱ, 150ⁱⁱⁱ, 150^{iv}, 150^{v}, 150^{vi}).

12. Dispositif selon la revendication 11, **caractérisé en ce que** des données de l'analyse sont stockées dans une base de données (120).

13. Dispositif selon l'une des revendications 11 ou 12, **caractérisé en ce que** plusieurs de clients (10, 20, 30) assignés à un répondant respectif sont reliés à un serveur (110) par l'intermédiaire d'un réseau informatique, serveur qui est relié à la base de données (120) et au dispositif de traitement de données (135).

14. Dispositif selon l'une des revendications 11 à 13, **caractérisé en ce qu'**au moins un client (50) est relié au serveur par l'intermédiaire d'un réseau informatique, auquel serveur peuvent être transmises des données de l'analyse statistique par l'intermédiaire des métadonnées collectées sur l'image.

15. Dispositif selon la revendication 14, **caractérisé par le fait que** des paramètres d'analyse tels que des paramètres de filtrage ou des données pour déterminer des parties d'image préalablement et/ou ultérieurement définies (150, 150ⁱ, 150ⁱⁱ, 150ⁱⁱⁱ, 150^{iv}, 150^{v}, 150^{vi}) peuvent être transmis au serveur par ledit client (50) recevant des données d'analyse.
